# EUROPEAN PATENT APPLICATION

(11) **EP 4 443 532 A1**
(43) Date of publication of application: **09.10.2024**
(21) Application number: 22899630.2
(22) Date of filing: 18.05.2022
(51) Int. Cl.: H01M 4/13, H01M 4/62, H01M 10/054

(54) **PRUSSIAN WHITE COMPOSITE MATERIAL, AND PREPARATION METHOD THEREFOR AND USE THEREOF**

(30) Priority: 30.11.2021 CN 202111445477
(71) Applicant: So-Fun Technology Corporation Limited, Zhuzhou, Hunan 412007 (CN)
(72) Inventor: XU, Xiongwen, Zhuzhou, Hunan 412007 (CN); TU, Jian, Zhuzhou, Hunan 412007 (CN); XIE, Jian, Zhuzhou, Hunan 412007 (CN)
(74) Representative: Petraz, Gilberto Luigi
(86) International application number: PCT/CN2022/093420
(87) International publication number: WO 2023/097983

(57) **Abstract**

The present invention relates to a Prussian white composite material. The Prussian white composite material includes an inner core and a carbon coating layer that coats at least a portion of an outer surface of the inner core, where the inner core has a general formula of NaₓMn_{1-y}M_{y}[Fe(CN)₆]_{z}, in the formula, M is selected from at least one of Fe, Co, Ni, Cu and Zn, x is greater than 1.5 and equal to or less than 2, y is greater than 0 and equal to or less than 0.3, and z is greater than 0.8 and equal to or less than 1. The Prussian white composite material of the present invention is free of crystal water (including interstitial water and coordinated water), has complete crystal lattices and good ionic conductivity and thermal stability, and is hardly decomposed at 500°C. A preparation method of the present invention has the advantages of being simple in process, low in cost, short in period, low in energy consumption, suitable for industrial production and the like.

## Description

### TECHNICAL FIELD

The present invention belongs to the technical field of energy storage batteries, and particularly relates to a Prussian white composite material, a preparation method therefor and use thereof.

### BACKGROUND

With rapid advancement of electrification of automobiles, demands for lithium-ion power batteries are huge, resulting in increasingly tight supply of lithium resources and a high price. On the other hand, with advancement of the national grand strategy "carbon peak and carbon neutrality", the development of clean energy based on wind and solar is imperative. In order to improve utilization efficiency of the clean energy, energy storage batteries are required to be equipped. In view of current dominance of lithium-ion batteries in the energy storage batteries, rapid development of the energy storage industry has also exacerbated rapid consumption of the lithium resources. Therefore, the development of novel energy storage batteries is urgent. Sodium-ion batteries have the comprehensive advantages of good safety, low cost, abundant resources, environmental friendliness and the like, and are very suitable for energy storage in a large scale. A key factor in development of the sodium-ion batteries is to obtain suitable cathode materials. As Prussian white materials structurally include open frame structures that are conducive to insertion and removal of large-size sodium ions, the Prussian white materials are suitable for use as the cathode materials for the sodium-ion batteries.

The Prussian white materials are generally synthesized in an aqueous phase and usually structurally include crystal water, so that the structural stability, cycle life and electrode processing of products are affected. According to the existing methods, the crystal water is generally removed by baking at high temperature and high vacuum, so that not only high energy consumption is caused, but also microstructures of the materials are destroyed. In addition, due to poor electronic conductivity of the Prussian white materials, the rate performance, the processing of thick electrode and the corresponding volumetric energy density are affected. Moreover, due to the presence of crystal water, the Prussian white materials generally have poor thermal stability, leading to great difficulty in carbon coating at high temperature. Therefore, the development of Prussian white materials that have high electrical conductivity and high thermal stability and are free of crystal water still has great challenges.

### SUMMARY

The first purpose of the present invention is to provide a Prussian white composite material that has good electrical conductivity and high thermal stability and is free of crystal water in view of the disadvantages of the prior art.

In order to achieve the above purpose, the following technical solutions are adopted in the present invention.

A Prussian white composite material includes an inner core and a carbon coating layer that coats at least a portion of an outer surface of the inner core, where the inner core has a general formula of NaₓMn_{1-y}M_{y}[Fe(CN)₆]_{z}, in the formula, M is selected from at least one of Fe, Co, Ni, Cu and Zn, x is greater than 1.5 and equal to or less than 2, y is greater than 0 and equal to or less than 0.3, and z is greater than 0.8 and equal to or less than 1.

The Prussian white composite material of the present invention is free of crystal water, and has a stable crystal lattice structure, good electrical conductivity and thermal stability and a long cycle life. In the present invention, by setting the above parameter ranges, the electronic conductivity, capacity, rate performance and cycle life of the material can be optimized and balanced, such that the product has excellent comprehensive performance.

Preferably, the inner core has a particle size of 500 nm to 5 µm. The Prussian white materials in large particles are not only conducive to maintaining structural stability in an electrolyte and inhibiting corrosion by the electrolyte, but also conducive to solid-liquid separation of the product during synthesis and subsequent electrode processing, and the volumetric energy density of a battery is increased.

Preferably, the carbon coating layer has a thickness of 1 nm to 100 nm. Carbon coating not only improves the electronic conductivity of the Prussian white material, but also can further inhibit corrosion by an electrolyte and improve the cycle life. Preferably, the NaₓMn_{1-y}M_{y}[Fe(CN)₆]_{z} is uniformly and completely coated with amorphous carbon.

The second purpose of the present invention is to provide a preparation method for a Prussian white composite material in view of the disadvantages of the prior art. First, a potassium-based Prussian white material with a low crystal water content is synthesized by a hydrothermal method, then a sodium-based Prussian white material is obtained by exchanging the potassium-based Prussian white material through an ion exchange method, and finally, a Prussian white composite material is obtained by carbon coating the sodium-based Prussian white material.

In order to achieve the above purpose, the following technical solutions are adopted in the present invention.

A preparation method for a Prussian white composite material includes the following steps:
step S1: mixing a soluble divalent manganese salt, a soluble divalent salt containing an M element and potassium citrate with a solvent to obtain a solution A;
step S2: adding a potassium ferrocyanide solution to the solution A for mixing, and carrying out a precipitation reaction to obtain a potassium-based Prussian white material;
step S3: dispersing the potassium-based Prussian white material obtained in step S2 in an organic solvent, and adding a reducing sodium salt for ion exchange to obtain a sodium-based Prussian white material; and
step S4: subjecting the sodium-based Prussian white material obtained in step S3 to carbon coating to obtain a Prussian white composite material.

In the present invention, by optimizing a preparation process in combination with coprecipitation, ion exchange and liquid phase sodium supplement, the obtained product has a high sodium content and a stable crystal structure, and the product is free of water, namely, crystal water, including interstitial water and coordinated water. In the present invention, the electronic conductivity of the product is also improved by the carbon coating, and the electrochemical performance, especially the capacity, the rate performance and the cycle stability, of a sodium-ion battery can be significantly improved when the product is used in a positive electrode of the sodium-ion battery.

In the present invention, it is found that the thermal stability of the Prussian white material is related to the crystal water content, and when the crystal water content is reduced, the thermal stability is improved. On the other hand, although the electronic conductivity can be improved by the carbon coating, the crystal structure is destroyed by temperature rise during the carbon coating. In the present invention, the Prussian white material that is free of crystal water is obtained by ion exchange between K ions and Na ions, and the thermal stability is improved, such that the stability of the crystal structure of the Prussian white material is maintained during the carbon coating. As found through research, the stability of the Prussian white material synthesized in the present invention can reach a temperature of 500°C or above, and that is to say, the material is hardly decomposed at 500°C. The carbon coating not only improves the electronic conductivity of the Prussian white material, but also can further inhibit corrosion by an electrolyte and improve the cycle life. Preferably, the NaₓMn_{1-y}M_{y}[Fe(CN)₆]_{z} is uniformly and completely coated with amorphous carbon.

An ion exchange reaction is carried out under dry conditions in a protective atmosphere, and the protective atmosphere refers to nitrogen, argon and helium. The Prussian white material that is free of crystal water (or contains an extremely low content of crystal water) can be obtained by the ion exchange reaction, and the crystal water in an extremely low content can be removed by ordinary vacuum drying to obtain the Prussian white material that is free of crystal water.

Compared with the sodium-based Prussian white material, the potassium-based Prussian white material has higher crystal lattice integrity, a higher alkali metal content, less crystal water and a larger particle size. Therefore, by synthesizing the potassium-based Prussian white material first and then performing ion exchange between potassium ions and sodium ions in a non-aqueous medium, the sodium-based Prussian white material that has a high sodium content, is free of crystal water (or contains an extremely low content of crystal water) and has a large particle size can be obtained.

The preparation method of the present invention has the advantages of being simple in process, low in cost, short in period, low in energy consumption, suitable for industrial production and the like.

Preferably, concentrations of the soluble divalent manganese salt and the soluble divalent salt containing an M element in the solution A are 0.1-1 mol/L. The concentration of the soluble divalent manganese salt is 0.1 mol/L, 0.2 mol/L, 0.5 mol/L, 0.6 mol/L, 0.8mol/L, 0.9 mol/L or 1.0 mol/L, and the concentration of the soluble divalent salt containing an M element is 0.1 mol/L, 0.2 mol/L, 0.5 mol/L, 0.6 mol/L, 0.8 mol/L, 0.9 mol/L or 1.0 mol/L. Under these conditions, the product can achieve a complete crystal structure, and the production efficiency can be improved.

Preferably, a concentration of potassium ferrocyanide in the potassium ferrocyanide solution is 0.1-1 mol/L. The concentration is 0.1 mol/L, 0.2 mol/L, 0.5 mol/L, 0.6 mol/L, 0.8 mol/L, 0.9 mol/L or 1.0 mol/L. Under these conditions, the product can achieve a complete crystal structure, and the production efficiency can be improved.

Preferably, a molar ratio of the potassium citrate to a sum of the soluble divalent manganese salt and the M salt in step S1 is (1-5):(1-2). Under these conditions and under the action of complexation, a co-precipitation reaction rate can be reduced, the crystal lattice integrity of the product can be improved, and the particle size of the product can be increased.

Preferably, the precipitation reaction in step S2 is carried out at a temperature of 60-90°C. Preferably, the temperature is 60°C, 65°C, 70°C, 75°C, 80°C, 85°C, 86°C, 88°C or 90°C. In such temperature range, the solubility of raw materials and the crystallinity and manufacturing cost of the product can be taken into account, and the particle size of the product can also be increased by the coprecipitation reaction at high temperature. The method further includes stirring, aging and post-treatment after the precipitation reaction. The aging is performed for 2-10 hours; and after the aging, the product is also subjected to the post-treatment, where the post-treatment includes the steps of cooling, washing, separation and vacuum drying. At this time, the obtained potassium-based Prussian white material has complete crystal lattices, a high K content and a low crystal water content. The organic solvent in step S2 is an anhydrous alcohol that is selected from, but is not limited to, methanol, ethanol, propanol or ethylene glycol.

Preferably, the reducing sodium salt in step S3 includes at least one of Na₂S₂O₃, Na₂S₄O₆, NaI or NaBr.

Preferably, a molar ratio of the reducing sodium salt to the potassium-based Prussian white material in step S3 is (1-10):(1-2). The molar ratio of the reducing sodium salt to the potassium-based Prussian white material in step S3 is (4-10):(1-2), specifically, being 1:1, 2:1, 3:1, 4:1, 5:1, 6:1, 7:1, 8:1, 9:1, 10:1, 5:2, 7:2 or 9:2. In the above range, the potassium ions are fully substituted with the sodium ions, and the sodium-based Prussian white material that has crystal integrity and is free of crystal water is obtained. Under these conditions, the sodium content of the product can be further increased, and the crystal lattice integrity of the product can be improved.

Preferably, the carbon coating is performed at a reaction temperature of 20-200°C. The carbon coating includes a magnetron sputtering method, an atomic layer deposition method and a plasma discharge method. The low temperature carbon coating method would not destroy the crystal structure of the Prussian white material. In the carbon coating process, the crystal water content can also be further reduced, and finally, the Prussian white material that is free of crystal water is obtained.

It should be noted that the above reaction conditions are related to each other, and the NaₓMn_{1-y}M_{y}[Fe(CN)₆]_{z}/C composite material that is free of crystal water with carbon coating at the surface and excellent properties cannot be obtained if deviating any of the above parameters.

The third purpose of the present invention is to provide a positive electrode with good electrical conductivity and thermal stability in view of the disadvantages of the prior art.

In order to achieve the above purpose, the following technical solutions are adopted in the present invention.

A positive electrode includes a positive current collector and a positive active material arranged on at least one surface of the positive current collector, where the positive active material includes the above-mentioned Prussian white composite material. Preferably, the positive active material may be arranged on one surface of the positive current collector and may be arranged on two surfaces of the positive current collector.

Particularly, an electrode is composed of a Prussian white composite material (i.e. NaₓMn_{1-y}M_{y}[Fe(CN)₆]_{z}/C active material), conductive carbon and a polymer binder. Preferably, the conductive carbon is selected from, but is not limited to, at least one of acetylene black, carbon nanotubes, carbon fibers and graphene; and preferably, the polymer binder is a polyfluorinated olefin that is selected from, but is not limited to, at least one of polytetrafluoroethylene, polyvinylidene fluoride, polyvinylidene fluoride-hexafluoropropylene and polyperfluoroethylene-propylene.

Preferably, a sodium supplement agent is added to the Prussian white composite material NaₓMn_{1-y}M_{y}[Fe(CN)₆]_{z}/C material, the sodium supplement agent includes Na₂S, a conductive agent and a catalyst, the conductive agent is selected from at least one of acetylene black, carbon nanotubes, carbon fibers and graphene, the catalyst is a transition metal oxide that is selected from, but is not limited to, at least one of CuO, MnO₂, Mn₃O₄ and NiO, and a weight ratio of the Na₂S, the conductive agent and the catalyst is (1-1.5):(0.01-0.1):(0.01-0.1). Preferably, a weight ratio of the sodium supplement agent to the layered active material is (1-1.5):100 to 10:100. By means of sodium supplement, sodium loss at a negative electrode during initial charge can be effectively compensated, and the initial coulomb efficiency can be improved. The initial coulomb efficiency of the material can be further improved by combination of liquid phase sodium supplement and solid phase sodium supplement.

The fourth purpose of the present invention is to provide a sodium-ion battery that has the characteristics of a large capacity, good rate performance and high cycle stability in view of the disadvantages of the prior art.

In order to achieve the above purpose, the following technical solutions are adopted in the present invention.

A sodium-ion battery includes the positive electrode as mentioned above. Specifically, a sodium-ion battery includes a positive electrode, a negative electrode, a separator, an electrolyte and a shell. The separator separates the positive electrode and the negative electrode, and the positive electrode, the negative electrode, the separator and the electrolyte are encapsulated and wrapped in the shell. The negative electrode includes a negative current collector and a negative active layer arranged on at least one surface of the negative current collector, where the negative active layer includes at least one negative active material of soft carbon, hard carbon or a hard carbon/soft carbon composite material. An organic solution containing an organic solvent, a sodium salt and an additive is used as an organic electrolyte. The sodium salt includes at least one of sodium hexafluorophosphate, sodium perchlorate, sodium trifluomethanesulfonate, sodium bis(trifluoromethylsulfonyl)imide, sodium bis(fluorosulfonyl)imide, sodium tetrafluoroborate and sodium bis(oxalato)borate.

Compared with the prior art, the present invention has the following beneficial effects. The Prussian white composite material of the present invention is free of crystal water (including interstitial water and coordinated water), has complete crystal lattices, good ionic conductivity and thermal stability, and is hardly decomposed at 500°C.

### BRIEF DESCRIPTION OF DRAWINGS

FIG. 1 shows an X-ray diffraction diagram of a Prussian white composite material prepared in Example 1 of the present invention.
FIG. 2 shows a charge-discharge curve of the Prussian white composite material prepared in Example 1 of the present invention.

### DETAILED DESCRIPTION OF EMBODIMENTS

The present invention is further described in detail below in combination with specific embodiments and drawings attached to the specification, but the embodiments of the present invention are not limited thereto.

### Example 1

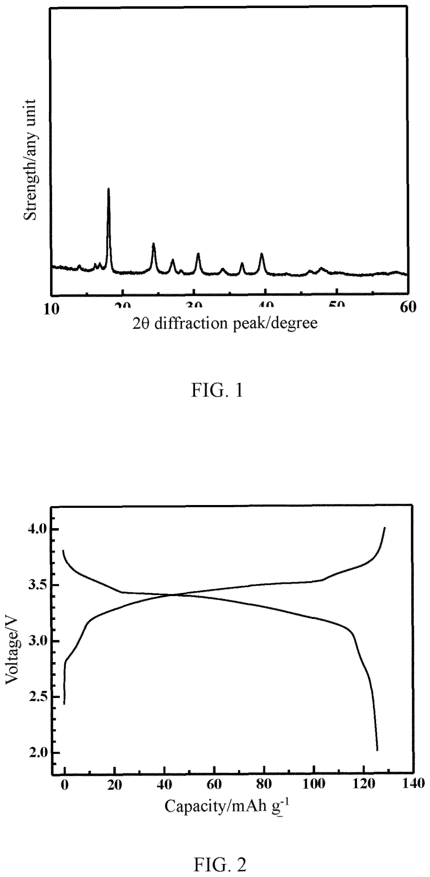

Potassium ferrocyanide trihydrate was dissolved in deionized water to obtain a solution I, namely a potassium ferrocyanide solution, with a concentration of 0.3 mol/L. Manganese sulfate monohydrate, copper sulfate pentahydrate and potassium citrate were dissolved in deionized water to obtain a solution A, named as a solution II (namely, the solution A), where a total concentration of the manganese sulfate monohydrate and the copper sulfate pentahydrate was 0.3 mol/L, a molar ratio of the manganese sulfate monohydrate to the copper sulfate pentahydrate was 8.5:1.5, and a molar ratio of the potassium citrate to a sum of the manganese sulfate monohydrate and the copper sulfate pentahydrate was 5:1. The solution I was mixed with the solution II, and a coprecipitation reaction was carried out at 80°C to obtain a suspension. The suspension was subjected to aging at 80°C for 4 hours. Finally, the suspension was subjected to centrifugal separation and vacuum drying at 110°C to obtain a potassium-based Prussian white material. The potassium-based Prussian white material was dispersed in anhydrous ethanol, sodium bis(trifluoromethylsulfonyl)imide and Na₂S₂O₃ were added, ion exchange was performed at 60°C, and subsequent treatment was performed to obtain a sodium-based Prussian white material without crystal water, Na_{1.76}Mn_{0.85}Cu_{0.15}[Fe(CN)₆]_{0.94}, where a molar ratio of the sodium bis(trifluoromethylsulfonyl)imide to the potassium-based Prussian white material was 6:1, and a molar ratio of the Na₂S₂O₃ to the potassium-based Prussian white material was 2:1. Using graphite as a target, the sodium-based Prussian white material was subjected to carbon coating by a magnetron sputtering method in an Ar atmosphere to obtain a Prussian white composite material. After testing, the obtained Prussian white composite material is free of crystal water and has a carbon content of 2%. The product has a physical phase of a rhombic phase without crystal water, as shown in FIG. 1. A button battery was assembled by using the carbon coated sodium-based Prussian white material prepared in this example as a positive electrode, metallic sodium as a negative electrode, glass fibers as a separator and a propylene carbonate/methyl ethyl carbonate solution of NaPF₆ as an electrolyte and adding fluoroethylene carbonate that was 3% of the weight of the electrolyte. A charge and discharge test was carried out at 0.5 C in a voltage range of 2-4 V. A capacity is 125 mAh/g, and as shown in FIG. 2, a capacity retention rate is 88% after 100 cycles.

### Example 2

Potassium ferrocyanide trihydrate was dissolved in deionized water to obtain a solution I, namely a potassium ferrocyanide solution, with a concentration of 0.5 mol/L. Manganese sulfate monohydrate, nickel sulfate hexahydrate and potassium citrate were dissolved in deionized water to obtain a solution II (namely, a solution A), where a total concentration of the manganese sulfate monohydrate and the nickel sulfate hexahydrate was 0.5 mol/L, a molar ratio of the manganese sulfate monohydrate to the nickel sulfate hexahydrate was 8:2, and a molar ratio of the potassium citrate to a sum of the manganese sulfate monohydrate and the nickel sulfate hexahydrate was 4:1. The solution I was mixed with the solution II, and a coprecipitation reaction was carried out at 80°C to obtain a suspension. The suspension was subjected to aging at 80°C for 4 hours. Finally, the suspension was subjected to centrifugal separation and vacuum drying at 110°C to obtain a potassium-based Prussian white material. The potassium-based Prussian white material was dispersed in anhydrous ethanol, sodium bis(fluorosulfonyl)imide and Na₂S₄O₆ were added, ion exchange was performed at 60°C, and subsequent treatment was performed to obtain an anhydrous sodium-based Prussian white material, Na_{1.74}Mn_{0.8}Ni_{0.2}[Fe(CN)₆]_{0.91}, where a molar ratio of the sodium bis(fluorosulfonyl)imide to the potassium-based Prussian white material was 6:1, and a molar ratio of the Na₂S₄O₆ to the potassium-based Prussian white material was 2:1. Using graphite as a target, the sodium-based Prussian white material was subjected to carbon coating by a magnetron sputtering method in an Ar atmosphere to obtain a Prussian white composite material. After testing, the obtained Prussian white composite material is free of crystal water and has a carbon content of 1.5%. The product has a physical phase of a rhombic phase without crystal water. After testing under same conditions as those in Example 1, a capacity retention rate is 90% after 100 cycles.

### Example 3

Potassium ferrocyanide trihydrate was dissolved in deionized water to obtain a solution I with a concentration of 0.4 mol/L. Manganese sulfate monohydrate, nickel sulfate hexahydrate, ferrous sulfate heptahydrate and potassium citrate were dissolved in deionized water to obtain a solution II, where a total concentration of the manganese sulfate monohydrate, the nickel sulfate hexahydrate and the ferrous sulfate heptahydrate was 0.4 mol/L, a molar ratio of the manganese sulfate monohydrate, the nickel sulfate hexahydrate and the ferrous sulfate heptahydrate was 7:2:1, and a molar ratio of the potassium citrate to a sum of the manganese sulfate monohydrate, the nickel sulfate hexahydrate and the ferrous sulfate heptahydrate was 5:1. The solution I was mixed with the solution II, and a coprecipitation reaction was carried out at 80°C to obtain a suspension. The suspension was subjected to aging at 80°C for 4 hours. Finally, the suspension was subjected to centrifugal separation and vacuum drying at 110°C to obtain a potassium-based Prussian white material. The potassium-based Prussian white material was dispersed in anhydrous ethanol, sodium bis(trifluoromethylsulfonyl)imide and Na₂S₂O₃ were added, ion exchange was performed at 60°C, and subsequent treatment was performed to obtain an anhydrous sodium-based Prussian white material, Na_{1.78}Mn_{0.7}Ni_{0.2}Fe_{0.1}[Fe(CN)₆]_{0.92}, where a molar ratio of the sodium bis(trifluoromethylsulfonyl)imide to the potassium-based Prussian white material was 5:1, and a molar ratio of the Na₂S₂O₃ to the potassium-based Prussian white material was 3:1. Using graphite as a target, the sodium-based Prussian white material was subjected to carbon coating by a magnetron sputtering method in an Ar atmosphere to obtain a Prussian white composite material. After testing, the obtained Prussian white composite material is free of crystal water and has a carbon content of 1.8%. The product has a physical phase of a rhombic phase without crystal water. After testing under same conditions as those in Example 1, a capacity retention rate is 93% after 100 cycles.

### Example 4

Different from Example 2, a molar ratio of potassium citrate to a sum of a soluble divalent manganese salt and an M salt in step S1 was 1:1.

Other conditions are the same as those in Example 1, which are not repeatedly described herein.

### Example 5

Different from Example 2, a molar ratio of potassium citrate to a sum of a soluble divalent manganese salt and an M salt in step S1 was 1:2.

Other conditions are the same as those in Example 1, which are not repeatedly described herein.

### Example 6

Different from Example 2, a molar ratio of potassium citrate to a sum of a soluble divalent manganese salt and an M salt in step S1 was 2:1.

Other conditions are the same as those in Example 1, which are not repeatedly described herein.

### Example 7

Different from Example 2, a molar ratio of potassium citrate to a sum of a soluble divalent manganese salt and an M salt in step S1 was 4:1.

Other conditions are the same as those in Example 1, which are not repeatedly described herein.

### Example 8

Different from Example 2, a precipitation reaction in step S2 was carried out at a temperature of 60°C.

Other conditions are the same as those in Example 1, which are not repeatedly described herein.

### Example 9

Different from Example 2, a precipitation reaction in step S2 was carried out at a temperature of 70°C.

Other conditions are the same as those in Example 1, which are not repeatedly described herein.

### Example 10

Different from Example 2, a precipitation reaction in step S2 was carried out at a temperature of 90°C.

Other conditions are the same as those in Example 1, which are not repeatedly described herein.

### Comparative Example 1

Different from Example 1, ion exchange was performed in an aqueous phase in step S3.

Other conditions are the same as those in Example 1, which are not repeatedly described herein.

### Comparative Example 2

Different from Example 1, a soluble divalent manganese salt, a soluble divalent salt containing an M element and a solvent were mixed to obtain a solution A in step S1.

Other conditions are the same as those in Example 1, which are not repeatedly described herein.

### Comparative Example 3

Different from Example 1, in step S3, a potassium-based Prussian white material obtained in step S2 was dispersed in an organic solvent, and a reducing sodium salt was added for ion exchange to obtain a Prussian white composite material.

Other conditions are the same as those in Example 1, which are not repeatedly described herein.

Performance test: The crystal water content and capacity retention rate after charge and discharge for 100 cycles of the Prussian white composite materials prepared in Examples 1-10 and Comparative Examples 1-3 were tested. Test results are recorded in Table 1.

**Table 1**

| Item | Crystal water content (%) | Capacity retention rate (%) | Item | Crystal water content (%) | Capacity retention rate (%) |
|---|---|---|---|---|---|
| Example 1 | 0 | 88 | Example 8 | 0 | 89 |
| Example 2 | 0 | 90 | Example 9 | 0 | 88 |
| Example 3 | 0 | 93 | Example 10 | 0 | 89 |
| Example 4 | 0 | 88 | Comparative Example 1 | 10.2 | 74 |
| Example 5 | 0 | 89 | Comparative Example 2 | 4.1 | 78 |
| Example 6 | 0 | 88 | Comparative Example 3 | 1.1 | 72 |
| Example 7 | 0 | 89 | / | / | / |

As can be concluded from Table 1, the Prussian white composite materials prepared by the present invention have a better capacity retention rate compared with the composite materials prepared in Comparative Examples 1-3, and the prepared batteries have good electrochemical performance. As can be concluded from comparison between Examples 1-3, when the M element is separately selected from Cu or Ni, the prepared Prussian white composite material has good comprehensive performance compared with materials of the prior art, the prepared battery has a high capacity retention rate, and the capacity retention rate reaches 88% or above after charge and discharge for 100 cycles. When the M element includes two elements, the prepared Prussian white composite material has a higher capacity retention rate of 93%, because multiple metal elements can achieve a synergistic effect to further stabilize crystal lattices. As can be concluded from comparison between Examples 2 and 4-7, when the molar ratio of the potassium citrate to a sum of the soluble divalent manganese salt and the M salt in step S1 is 5:1, the prepared Prussian white composite material has better properties. As can be concluded from comparison between Examples 2 and 8-10, when the precipitation reaction temperature in step S2 is set at 80°C, the prepared Prussian white composite material has better properties. As can be concluded from comparison between Example 1 and Comparative Example 1, when a reaction is carried out in an organic phase, namely anhydrous ethanol, in the step of ion exchange, bonding between water and the material can be reduced, so that water in the final material is reduced or avoided, and the material is formed into the Prussian white composite material that is free of crystal water and has good properties. As can be concluded from comparison between Example 1 and Comparative Example 2, when the potassium citrate is not added in step S1, the finally prepared material contains crystal water, which affects properties of the material. As can be concluded from comparison between Example 1 and Comparative Example 3, when the step of carbon coating is omitted, the prepared material contains 1.1% of crystal water and has poor properties, because the step of carbon coating allows the crystal water content to be further reduced and allows the Prussian white composite material that is free of crystal water to be finally obtained.

According to revelation and instruction of the above specification, alterations and modifications of the above embodiments can also be made by persons skilled in the field to which the present invention belongs. Therefore, the present invention is not limited to the above specific embodiments, and any obvious improvements, substitutions or variations made by persons skilled in the art on the basis of the present invention fall within the scope of protection of the present invention. In addition, although some specific terms are used in the specification, these terms are only used for convenient description without constituting any limitations of the present invention.

## Claims

1. A Prussian white composite material, comprising an inner core and a carbon coating layer that coats at least a portion of an outer surface of the inner core, wherein the inner core has a general formula of NaₓMn_{1-y}M_{y}[Fe(CN)₆]_{z}, in the formula, M is selected from at least one of Fe, Co, Ni, Cu and Zn, x is greater than 1.5 and equal to or less than 2, y is greater than 0 and equal to or less than 0.3, and z is greater than 0.8 and equal to or less than 1.

2. The Prussian white composite material according to claim 1, wherein the inner core has a particle size of 500 nm to 5 µm.

3. The Prussian white composite material according to claim 1 or 2, wherein the carbon coating layer has a thickness of 1 nm to 100 nm.

4. A preparation method for a Prussian white composite material, comprising the following steps:
step S1: mixing a soluble divalent manganese salt, a soluble divalent salt containing an M element and potassium citrate with a solvent to obtain a solution A;
step S2: adding a potassium ferrocyanide solution to the solution A for mixing, and carrying out a precipitation reaction to obtain a potassium-based Prussian white material;
step S3: dispersing the potassium-based Prussian white material obtained in step S2 in an organic solvent, and adding a reducing sodium salt for ion exchange to obtain a sodium-based Prussian white material; and
step S4: subjecting the sodium-based Prussian white material obtained in step S3 to carbon coating to obtain a Prussian white composite material.

5. The preparation method for a Prussian white composite material according to claim 4, wherein concentrations of the soluble divalent manganese salt and the soluble divalent salt containing an M element in the solution A are 0.1 mol/L to 1 mol/L.

6. The preparation method for a Prussian white composite material according to claim 4, wherein a concentration of potassium ferrocyanide in the potassium ferrocyanide solution is 0.1 mol/L to 1 mol/L.

7. The preparation method for a Prussian white composite material according to claim 4, wherein a molar ratio of the potassium citrate to a sum of the soluble divalent manganese salt and the M salt in step S1 is (1-5):(1-2).

8. The preparation method for a Prussian white composite material according to claim 4, wherein the precipitation reaction in step S2 is carried out at a temperature of 60-90°C.

9. The preparation method for a Prussian white composite material according to claim 4, wherein the reducing sodium salt in step S3 comprises at least one of Na₂S₂O₃, Na₂S₄O₆, NaI or NaBr.

10. The preparation method for a Prussian white composite material according to claim 4 or 7, wherein a molar ratio of the reducing sodium salt to the potassium-based Prussian white material in step S3 is (1-10):(1-2).

11. The preparation method for a Prussian white composite material according to claim 4, wherein the carbon coating is performed at a reaction temperature of 20-200°C.

12. A positive electrode, comprising a positive current collector and a positive active material arranged on at least one surface of the positive current collector, wherein the positive active material comprises the Prussian white composite material according to any one of claims 1-3.

13. A sodium-ion battery, comprising the positive electrode according to claim 12.
